# EUROPÄISCHE PATENTSCHRIFT

(11) **EP 4 317 741 B1**
(45) Veröffentlichungstag und Bekanntmachung des Hinweises auf die Patenterteilung: **25.03.2026**
(21) Anmeldenummer: 23188571.6
(22) Anmeldetag: 31.07.2023
(51) Int. Cl.: F16H 1/16, A61G 5/06, A61G 5/10, B66B 9/08, F16H 55/22, F16H 55/24

(54) **ANTRIEB FÜR EINEN BEWEGLICHEN GEGENSTAND**
DRIVE FOR A MOVABLE OBJECT
ENTRAÎNEMENT POUR UN OBJET MOBILE

(30) Priorität: 01.08.2022 DE 102022002787
(43) Veröffentlichungstag der Anmeldung: 07.02.2024
(73) Patentinhaber: ABM Greiffenberger Antriebstechnik GmbH, 95615 Marktredwitz (DE)
(72) Erfinder: Schön, Markus, 95666 Mitterteich (DE)
(74) Vertreter: LS-MP von Puttkamer Berngruber Loth Spuhler

(56) Entgegenhaltungen:
- CN-U- 207 364 187
- US-A- 5 836 076
- US-B2- 9 222 555

## Beschreibung

Die Erfindung betrifft einen Antrieb für einen beweglichen Gegenstand. Der Antrieb weist wenigstens eine Schneckenwelle auf, in die wenigstens ein Schneckenrad eingreift.

### Stand der Technik

Aus der DE 10 2021 004 709 A1 ist ein Getriebe mit einem Gehäuse und einer selbsttätig wirkenden Fangfunktion bekannt. In dem Getriebegehäuse sind drehbare Getriebekomponenten angeordnet. Die Getriebekomponenten sind zumindest eine Welle und ein Zahn- oder Schneckenrad. Zusätzlich sind eine Fangvorrichtung zum Anhalten der Drehbewegung zumindest einer Getriebekomponente bei Verschleiß oder Versagen einer Getriebekomponente vorgesehen. In dem Gehäuseinneren ist eine Zustandsüberwachungseinrichtung positioniert, mit der der Verschleiß-Zustand der Getriebekomponenten überwacht wird.

Aus der US 5 836 076 A ist ein Verfahren zum Zusammenbau eines doppelt umhüllenden Untersetzungsgetriebes bekannt. Das Verfahren umfasst die Vorbestimmung der Dicke von Unterlegscheiben, so dass eine Schneckenspirale und ein Schneckenrad in ihren Krümmungsmittelpunkten ineinandergreifen. Das Verfahren umfasst das Anbringen des Untersetzungsgetriebes und mindestens einer Lagerhalterung einer Schneckenbaugruppe und einer Schneckenradbaugruppe in Lehren, um verschiedene Abmessungen des Gehäuses und der Halterungen zu bestimmen. Zur Bestimmung des Krümmungsmittelpunkts der Schnecke und des Schneckenrads ist eine Zahnradlehre vorgesehen.

Die US 9 222 555 B2 stellt einen linearen Aktuator bereit. Der Aktuator umfasst einen Motor, ein Getriebe und eine lineare Betätigungsvorrichtung. Der Motor dient als Dreheingang für das Getriebe, das einen rotierenden Ausgang erzeugt. Die lineare Betätigungsvorrichtung wandelt die Rotationsleistung des Getriebes in eine lineare Bewegung um zum Antrieb einer Last in einer linearen Richtung.

Weiterhin zeigt die CN 207 364 187 U ein Untersetzungsgetriebe für eine Ballenpresse. Eine Abtriebswelle des Untersetzungsgetriebes weist ein Schneckengetriebe auf. Eine Schnecke steht mit dem Schneckengetriebe in Eingriff. Es ist ein scheibenförmiger Eingangsflansch vorgesehen, an dem eine Bremse befestigt ist. Die Bremse ist mit einem Ende der Schnecke verbunden.

### Aufgaben der Erfindung

Die Erfindung stellt sich die Aufgabe, ein unbeabsichtigtes Kippen und/oder Verschwenken und/oder Verdrehen eines Elements eines beweglichen Gegenstands, in Form eines Treppenlifts zu verhindern.

Eine weitere Aufgabe der Erfindung besteht darin, bei einem Antrieb für einen beweglichen Gegenstand ein verschleißbedingtes, unkontrolliertes Drehen von Verzahnungskomponenten des Antriebs gegeneinander zu verhindern.

Die Erfindung stellt sich weiter die Aufgabe, bei einem Antrieb einen verschleißbedingten Axialversatz von Verzahnungskomponenten des Antriebs auszuschließen.

Darüber hinaus stellt sich die Erfindung die Aufgabe, bei einem Antrieb einen Radialversatz von Verzahnungskomponenten des Antriebs zu verhindern.

### Lösung der Aufgaben

Die Aufgaben werden gelöst durch einen Antrieb für einen Treppenlift.

Der Antrieb weist wenigstens eine Schneckenwelle auf.

In die Schneckenwelle greift wenigstens ein Schneckenrad ein.

Die Schneckenwelle weist wenigstens eine Erhöhung auf.

Es ist wenigstens eine Buchse angeordnet, die an der Schneckenwelle anliegt.

Eine Schneckenwelle weist eine konische Form auf.

Die Buchse weist zumindest bereichsweise eine konische Form auf.

Die Buchse liegt mit ihrer konischen Form radial und/oder axial konisch eng an der konischen Form der Schneckenwelle an.

Das enge Anliegen der Buchse an der Schneckenwelle verhindert eine unkontrollierte Drehung des Schneckenrads und/oder der Schneckenwelle gegeneinander.

### Beweglicher Gegenstand

Die Erfindung betrifft einen Antrieb für einen beweglichen Gegenstand, in Form eines Treppenlifts.

### Treppenlift

Die Erfindung versteht unter einem Treppenlift einen sogenannten Treppenschrägaufzug. Verallgemeinernd wird jedoch im Weiteren von einem Treppenlift gesprochen.

Der Treppenlift dient vorzugsweise, aber nicht ausschließlich, dazu, dass kranke, ältere und/oder gehbehinderte Menschen über einzelne Stufen oder über wenigstens eine Treppe sitzend oder auch stehend hinweg befördert werden können.

Es versteht sich von selbst, dass mit dem Treppenlift auch Lasten transportiert werden können. Selbstverständlich können mit dem Treppenlift auch Rollstühle mit darauf sitzenden Menschen befördert werden. Im Weiteren wird beispielhaft, aber nicht ausschließlich, davon ausgegangen, dass mit dem Treppenlift ein Mensch sitzend befördert wird.

Der Treppenlift umfasst wenigstens ein Sitzelement und/oder eine Plattform. Zusätzlich ist ein Antriebsaggregat angeordnet. Im Weiteren wird zur Vereinfachung von einem Antrieb gesprochen.

Der Treppenlift umfasst wenigstens eine Trag- und Führungsschiene. Über die Trag- und Führungsschiene wird der Treppenlift vorzugsweise, aber nicht ausschließlich, lösbar an der Treppe und/oder an einer benachbarten Wand befestigt.

Es versteht sich von selbst, dass mit Hilfe des Treppenlifts gerade sowie gekurvte Treppen überbrückt werden können.

Zur Erfüllung vorgegebener Sicherheitsbestimmungen müssen Treppenlifte bestimmte Sicherheitsbestimmungen für die Konstruktion und/oder für den Einbau erfüllen. Die einschlägigen Sicherheitsbestimmungen können die Konstruktion und/oder die Herstellung und/oder den Einbau und/oder die Wartung oder auch die Demontage des Treppenlifts betreffen.

Vorzugsweise, aber nicht ausschließlich, sind die Sicherheitsbestimmungen in der an sich bekannten DIN-Norm 81-40 / 2020-12 festgelegt.

Es können auch noch andere Normen und/oder Vorschriften vorliegen, in denen zugehörige Sicherheitsbestimmungen niedergelegt sind.

### Sitzelement

Der Treppenlift weist wenigstens ein Sitzelement auf. Das Sitzelement kann eine feste oder hochklappbare Sitzfläche umfassen. Das Sitzelement kann jeweils mit wenigstens einer Rückenlehne und/oder einer Armlehne und/oder einer Fußstütze und/oder einem Sicherheitsgurt ausgestattet sein.

### Antrieb

Der Treppenlift und/oder das Sitzelement, weist wenigstens einen Antrieb auf.

Der Antrieb dient zur Erzeugung einer Bewegung des Treppenlifts und/oder des Sitzelements des Treppenlifts.

Der Antrieb wirkt auf das wenigstens eine Sitzelement und/oder auf die wenigstens eine Plattform des Treppenlifts ein.

Im Folgenden wird beispielhaft, aber nicht ausschließlich, von einem Antrieb für das Sitzelement ausgegangen, über den der Neigungswinkel des Sitzelements verstellbar ist.

Der Antrieb zur Verstellung des Neigungswinkels kann der Antrieb sein, mit dem die Höheneinstellung des Sitzelements veränderbar ist.

Der Antrieb zur Verstellung des Neigungswinkels kann wenigstens ein Bauelement umfassen.

Der Ausfall wenigstens eines Bauelements des Antriebs zur Verstellung des Neigungswinkels kann zu einer unbeabsichtigen Verstellung des Neigungswinkels des Sitzelements gegenüber der Horizontalen führen. Der Neigungswinkel kann sich dabei gegenüber der Horizontalen unbeabsichtigt um mehr als 15° verändern.

Es versteht sich von selbst, dass auch ein anderer Antrieb gemeint sein kann.

Zur Vereinfachung wird der Antrieb für den beweglichen Gegenstand im Folgenden als Antrieb bezeichnet.

### Sicherheitseinrichtungen

Zur Erfüllung der einschlägigen Sicherheitsbestimmungen muss der Treppenlift (beweglicher Gegenstand) vorzugsweise, aber nicht ausschließlich, vorgeschriebene technische Einrichtungen aufweisen, die angeordnet sein müssen, um die Sicherheit des Menschen zu gewährleisten, der auf dem Sitzelement des Treppenlifts Platz nimmt.

Vorzugsweise, aber nicht ausschließlich, soll verhindert werden, dass das Sitzelement des Treppenlifts kippt und der Mensch von dem Sitzelement herunterstürzt.

Beispielhaft, aber nicht ausschließlich, umfassen die technischen Einrichtungen für die Sicherheit des Treppenlifts eine rutschfeste Fussauflagefläche. Darüber hinaus können als Sicherheitseinrichtungen Armlehnen und/oder ein Sicherheitsgurt angeordnet sein.

Weitere Sicherheitseinrichtungen können eine langsame und/oder eine gleichmäßige Geschwindigkeit des Treppenlifts betreffen.

### Sicherheitseinrichtung des Antriebs für den beweglichen Gegenstand

Eine Sicherheitseinrichtung des Antriebs für den Treppenlift dient dazu, die Neigung des Sitzelements in einem gewünschten Winkel gegenüber der Horizontalen zu halten.

Ein Kippen des Sitzelements, vorzugsweise aus der Horizontalen, wird auf diese Weise wirksam verhindert.

Vorzugsweise, aber nicht ausschließlich, ist ein Winkel für die Neigung des Sitzelements gegenüber der Horizotalen einstellbar. Der Winkel für die Neigung des Sitzelements wird im Weiteren als Neigungswinkel bezeichnet.

Der Neigungswinkel kann auf einen Wert auf einer Skala von Werten eingestellt sein. Der Neigungswinkel kann auf jeden anderen Wert verstellt werden.

Die Sicherheitseinrichtung zur Einhaltung des Neigungswinkels des Sitzelements verhindert eine Neigung der Sitzfläche um mehr als 15° gegenüber der Horizontalen.

### Komponenten der Sicherheitseinrichtung des Antriebs für den beweglichen Gegenstand

Die Sicherheitseinrichtung des Antriebs zur Einhaltung der Neigung des Sitzelements umfasst eine oder mehrere der folgenden Komponenten.

### Schneckenwelle

Die Erfindung versteht unter einer Schneckenwelle eine Welle eines Schneckengetriebes des Antriebs. Das Schneckengetriebe umfasst die Schneckenwelle und das Schneckenrad. Die Schneckenwelle des Antriebs weist wenigstens einen schraubenförmigen Gewindegang auf. Der Gewindegang leitet Bewegungen und/oder Kräfte weiter. Die Bewegungen und/oder die Kräfte verlaufen parallel oder geradlinig zur Schneckenwelle.

Vorzugsweise an beiden Enden der Schneckewelle des Antriebs, weist die Schneckewelle wenigstens eine Erhöhung auf. Die Erhöhungen der Schneckenwelle sind jeweils an einem Ende einer Eingriffsverzahnung der Schneckenwelle angeordnet.

Das Schneckenrad des Antriebs greift mit seinen Zähnen in die Eingriffsverzahnung der Schneckenwelle ein.

Auf das Schneckenrad wird nachfolgend im Detail eingegangen.

Die Erhöhungen an den Enden der Schneckenwelle können konische Erhöhungen sein.

Die Erhöhungen der Schneckenwelle verhindern eine unkontrollierte Drehung des Schneckenrads und/oder der Schneckenwelle gegeneinander. Die unkontrollierte Drehung des Schneckenrads und/oder der Schneckenwelle des Antriebs kann aufgrund von mechanischem Verschleiß der Schneckenwelle und/oder des Schneckenrads auftreten.

### Schneckenrad

Abwechselnd miteinander sind an dem Schneckenrad des Schneckengetriebes des Antriebs radial Zähne und Zahnlücken angeordnet. Der Gewindegang der Schneckenwelle greift in die Zahnlücken des Schneckenrads ein.

### Buchse

Die Erfindung versteht unter der Buchse des Antriebs vorzugsweise, aber nicht auschließlich, eine Gleitbuchse. Die Buchse hat einen Querschnitt, der in seinem Durchmesser an den Umfang der Schneckenwelle des Antriebs angepasst ist.

Die Buchse liegt axial eng an der Schneckenwelle an. Die Buchse liegt eng an den Erhöhungen der Schneckenwelle an. Die Buchse des Antriebs hat zumindest bereichsweise eine konische Form, die an der konischen Form der Schneckenwelle eng anliegt.

Das enge Anliegen der Buchse an der Schneckenwelle verhindern eine unkontrollierte Drehung des Schneckenrads und/oder der Schneckenwelle gegeneinander. Die unkontrollierte Drehung des Schneckenrads und/oder der Schneckenwelle kann aufgrund von mechanischem Verschleiß der Schneckenwelle und/oder des Schneckenrads auftreten.

Alternativ zur konisch eng an der Schneckenwelle anliegenden Buchse des Antriebs kann auch ein Gehäuse vorgesehen sein. Das Gehäuse liegt ebenfalls konisch eng an der Schneckenwelle an.

### Vorteile der Erfindung

Die Anordnung des Schneckenrads und/oder der Schneckenwelle und/oder der Buchse als Komponenten der Sicherheitseinrichtung des Antriebs für den beweglichen Gegenstand erweist sich als äußerst vorteilhaft. Vorzugsweise, aber nicht ausschließlich, dient die Anordnung des Schneckenrads und/oder der Schneckenwelle und/oder der Buchse dem sicheren Betrieb des Antriebs des beweglichen Gegenstands.

Insbesondere bei einem Lagerschaden und/oder bei einem Defekt an einem Sicherungsring des Antriebs kann ein Axialversatz der Schneckenwelle erfolgen. Aufgrund des Axialversatzes der Schneckenwelle verklemmt die Verzahnung des Schneckenrads an der Erhöhung der Schneckenwelle.

Die Erhöungen der Schneckenwelle sind vorzugsweise, aber nicht ausschließlich, an beiden Enden der Eingriffsverzahnung der Schneckenwelle angeordnet. Bei einem Lagerschaden und/oder bei einem Defekt an einem Sicherungsring verklemmt das Schneckenrad des Antriebs axial in beiden Richtungen entlang der Längsachse der Schneckenwelle an den Erhöhungen der Schneckenwelle.

Die Buchse des Antriebs liegt radial und/oder axial konisch eng an der Schneckenwelle an. Vorzugsweise bei einem Lagerschaden und/oder bei einem Defekt an einem Sicherungsring verklemmt die Schneckenwelle axial in beiden Richtungen entlang der Längsachse der Schneckenwelle des Antriebs an der Buchse.

Bei einem Schneckenwellenbruch und/oder bei einem Lagerbruch erweist sich die Erfindung als sehr vorteilhaft, da die enganliegende Buchse einen Radialversatz der Schneckenwelle gegenüber dem Schneckenrad des Antriebs verhindert.

Der Eingriff der Zähne des Schneckenrads des Antriebs in die Schneckenwelle bleibt auf Grund der enganliegenden Buchse erhalten.

Im vorliegenden Beispiel wirkt der Antrieb auf den Neigungswinkel des Sitzelements gegenüber der Horizontalen. Der Neigungswinkel des Sitzelements und/oder die Höhe des Sitzelements des Treppenlifts kann mit Hilfe des Antriebs an den jeweiligen Bedarf des Menschen, der auf dem Sitzelement sitzt, angepasst werden.

Mit Hilfe der Erfindung kann verhindert werden, dass sich der vorgewählte Neigungswinkel des Sitzelements des Treppenlifts gegenüber der Horizontalen in unbeabsichtigter Weise verändert. Auf diese Weise wird sichergestellt, dass der auf dem Sitzelement sitzende Mensch nicht vom Sitzelement des Treppenlifts herabstürzt.

Vorzugsweise an beiden Seiten der Eingriffsverzahnung der Schneckenwelle des Antriebs weist die Schneckenwelle eine Erhöhung auf. Bei einem unbeabsichtigen Axialversatz der Schneckenwelle in beiden Richtungen entlang der Längsachse der Schneckenwelle verklemmt die Verzahnung des Schneckenrads des Antriebs an der Erhöhung der Schneckenwelle.

Bei einem unbeabsichtigen Axialversatz der Schneckenwelle in beiden Richtungen entlang der Längsachse der Schneckenwelle, als Komponente der Sicherheitseinrichtung des Antriebs zur Einhaltung der Neigung des Sitzelements, kann die Erhöhung der Schneckenwelle auch an der eng an der Schneckenwelle anliegenden Buchse verklemmen.

Mit Hilfe des Antriebs kann wirksam verhindert werden, dass sich eine Neigung des Sitzelements aus einer vorgewählten Position gegenüber der Horizontalen heraus verändert.

Die konische Ausbildung der Erhöhung der Schneckenwelle des Antriebs hat den Vorteil, dass sich die Erhöhung radial um den Umfang der Schneckenwelle herum erstreckt. Das Verklemmen des Schneckenrads und/oder der Buchse gegenüber der Schneckenwelle kann auch bei einer radialen Drehung der Schneckenwelle des Antriebs um die Längsachse der Schneckenwelle erfolgen.

Die eng an der Schneckenwelle anliegende Buchse verhindert einen Axialversatz der Schneckenwelle in beide Richtungen entlang der Längsachse der Schneckenwelle des Antriebs.

Anstatt einer Buchse kann auch ein Gehäuse und/oder eine Gehäuseauslegung, insbesondere des Antriebs oder eines anderen Bereichs des Treppenlifts, eingesetzt werden. Auf diese Weise wird ein unbeabsichtiger Axialversatz der Schneckenwelle des Antriebs wirksam verhindert.

Weitere vorteilhafte Beispiele und Ausführungsformen werden anhand der Zeichnung näher beschrieben:

### Hierbei zeigen:

- Fig. 1: einen Antrieb für einen beweglichen Gegenstand und
- Fig. 2: die Schneckenwelle des Antriebs mit Schneckenrad.

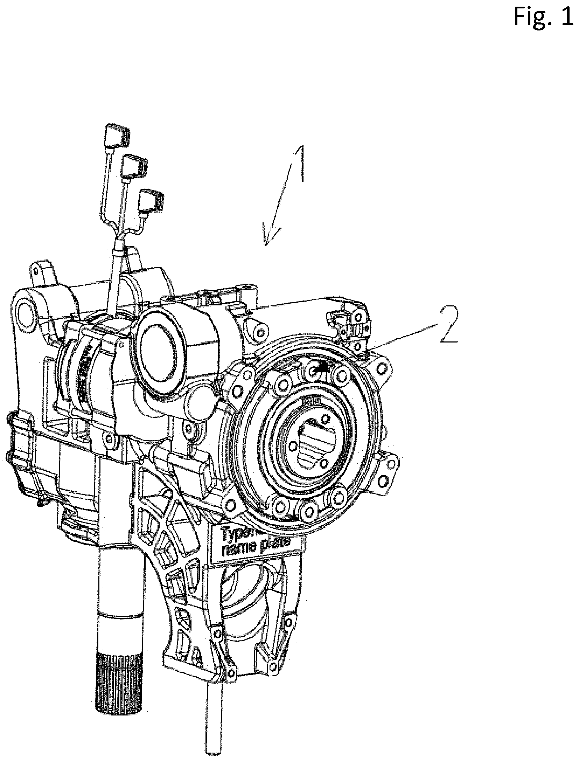

Die Fig. 1 zeigt einen Antrieb 1 für einen Treppenlift (nicht gezeigt).

Der Antrieb 1 weist einen Anschlussflansch 2 auf, mit dem das Sitzelement (nicht gezeigt) am Antrieb 1 befestigt ist.

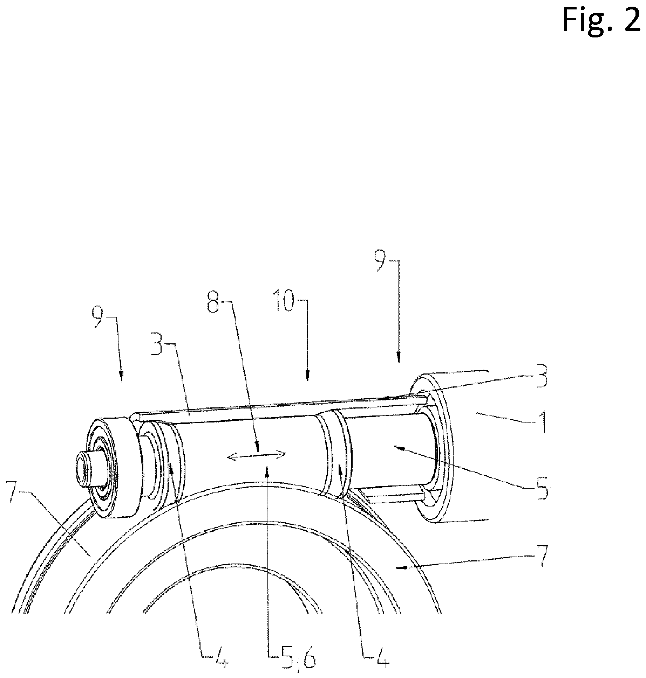

In der Fig. 2 ist eine Sicherheitseinrichtung 10 gezeigt, die verhindert, dass das Sitzelement (nicht gezeigt) aus einem vorgegebenen Neigungswinkel heraus gegenüber der Horizontalen nach vorne oder nach hinten und/oder zur Seite kippt.

Die Sicherheitseinrichtung 10 umfasst ein Schneckenrad 7, eine Buchse 3 sowie Erhöhungen 4 einer Schneckenwelle 5 des Antriebs 1.

Die Schneckenwelle 5 umfasst in der Fig. 2 zwei Erhöhungen 4. Die Erhöhungen 4 sind konisch ausgeformt.

Zwischen den Erhöhungen 4 der Schneckenwelle 5 des Antriebs 1 ist eine Eingriffsverzahnung 6 der Schneckenwelle 5 dargestellt.

In die Eingriffsverzahnung 6 der Schneckenwelle 5 greifen Zähne (nicht dargestellt) des Schneckenrads 7 ein.

Radial oberhalb der Schneckenwelle 5 ist in der Darstellung der Fig. 2 die Buchse 3 des Antriebs 1 gezeigt.

Die Buchse 3 hat einen Querschnitt, der in seinem Durchmesser an den Umfang der Schneckenwelle 5 angepasst ist.

Die Buchse 3 liegt in der Fig. 2 axial eng an der Schneckenwelle 5 an.

Die Buchse 3 liegt eng an den Erhöhungen 4 der Schneckenwelle 5 des Antriebs 1 an. Die Buchse 3 hat eine konische Form, die an der konischen Form der Schneckenwelle 5 eng anliegt.

Vorzugsweise, aber nicht ausschnließlich, im Fall eines Lagerschadens im Bereich des Antriebs 1 des Treppenlifts und/oder bei einem Defekt an einem Sicherungsring kann ein unbeabsichtigter Axialversatz der Schneckenwelle 5 in und/oder entgegen der Längsachse 8 der Schneckenwelle 5 des Antriebs 1 erfolgen.

Aufgrund des Axialversatzes der Schneckenwelle 5 des Antriebs 1 verklemmt die Verzahnung (nicht gezeigt) des Schneckenrads 7 an einer der Erhöhungungen 4 der Schneckenwelle 5.

Die Erhöhungen 4 der Schneckenwelle 5 des Antriebs 1 sind in der Fig. 2 an beiden Enden 9 der Schneckenwelle 5 im Bereich der Eingriffsverzahnung 6 angeordnet. Bei einem Lagerschaden und/oder bei einem Defekt an einem Sicherungsring verklemmt das Schneckenrad 7 axial in beiden Richtungen entlang der Längsachse 8 der Schneckenwelle 5 an den Erhöhungen 4 der Schneckenwelle 5.

Die Buchse 3 liegt in der Darstellung der Fig. 2 radial und/oder axial konisch eng an der Schneckenwelle 5 des Antriebs 1 an. Bei einem Lagerschaden und/oder bei einem Defekt an einem Sicherungsring des Antriebs 1 für den Treppenlift verklemmt die Schneckenwelle 5 mit ihren Erhöhungen 4 axial in beiden Richtungen entlang der Längsachse 8 der Schneckenwelle 5 an der Buchse 3 des Antriebs 1.

Bei einem Bruch der Schneckenwelle 5 und/oder bei einem Bruch eines Lagers des Antriebs 1 verhindert die radial eng an der Schneckenwelle 5 anliegende Buchse 3 einen Radialversatz der Schneckenwelle 5 relativ zur Längsachse 8 der Schneckenwelle 5.

### Bezugsziffernliste

- 1: Antrieb für einen beweglichen Gegenstand
- 2: Anschlussflansch
- 3: Buchse
- 4: Erhöhung
- 5: Schneckenwelle
- 6: Eingriffsverzahnung
- 7: Schneckenrad
- 8: Längsachse
- 9: Ende der Schneckenwelle
- 10: Sicherheitseinrichtung

## Patentansprüche

1. Antrieb für einen Treppenlift,
wobei der Antrieb (1) wenigstens eine Schneckenwelle (5) aufweist, in die wenigstens ein Schneckenrad (7) eingreift,
wobei
die Schneckenwelle (5) wenigstens eine Erhöhung (4) aufweist und wenigstens eine Buchse (3) angeordnet ist, die an der Schneckenwelle (5) anliegt,
wobei
die Schneckenwelle (5) eine konische Form aufweist **dadurch gekennzeichnet dass**,
die Buchse (3) zumindest bereichsweise eine konische Form aufweist,
wobei
die Buchse (3) mit ihrer konischen Form radial und/oder axial konisch eng an der konischen Form der Schneckenwelle (5) anliegt, wobei das enge Anliegen der Buchse (3) an der Schneckenwelle (5) eine unkontrollierte Drehung des Schneckenrads (7) und/oder der Schneckenwelle (5) gegeneinander verhindert.

2. Antrieb für einen Treppenlift nach Anspruch 1, **dadurch gekennzeichnet, dass**
die Schneckenwelle (5) wenigstens eine Eingriffsverzahnung (6) für das Schneckenrad (7) aufweist,
wobei auf wenigstens einer Seite der Eingriffsverzahnung (6) die Erhöhung (4) der Schneckenwelle (5) angeordnet ist.

3. Treppenlift mit einem Antrieb für einen Treppenlift nach Anspruch 1, **dadurch gekennzeichnet, dass** der Treppenlift wenigstens ein Sitzelement und/oder eine Plattform umfasst, wobei die Erhöhung (4) der Schneckenwelle (5) konisch ausgebildet ist, und der Antrieb (1) auf das wenigstens eine Sitzelement und/oder auf die wenigstens eine Plattform des Treppenlifts einwirkt.

4. Antrieb für einen Treppenlift nach Anspruch 1, **dadurch gekennzeichnet, dass** die Buchse (3) eine Gehäuseauslegung ist.

## Claims

1. Drive for a stair lift,
wherein the drive (1) has at least one worm shaft (5) in which at least one worm wheel (7) meshes,
wherein
the worm shaft (5) having at least one elevation (4) and at least one bushing (3) being arranged, which bears against the worm shaft (5),
wherein
the worm shaft (5) has a conical shape, **characterised in that**
the bushing (3) has a conical shape at least in some areas, wherein
wherein the bushing (3) with its conical shape rests closely against the conical shape of the worm shaft (5) in the radial and/or axial direction, whereby the close fit of the bushing (3) against the worm shaft (5) prevents uncontrolled rotation of the worm wheel (7) and/or the worm shaft (5) relative to each other.

2. Drive for a stair lift according to claim 1, **characterised in that**
the worm shaft (5) has at least one engagement tooth (6) for the worm wheel (7),
wherein the elevation (4) of the worm shaft (5) is arranged on at least one side of the engagement tooth (6).

3. Stairlift with a drive for a stairlift according to claim 1, **characterised in that** the stairlift comprises at least one seat element and/or one platform, wherein the elevation (4) of the worm shaft (5) is conical in shape, and the drive (1) acts on the at least one seat element and/or on the at least one platform of the stairlift.

4. Drive for a stairlift according to claim 1, **characterised in that** the bushing (3) is a housing design.

## Revendications

1. Unité d'entraînement pour monte-escalier,
dans lequel l'entraînement (1) comporte au moins un arbre à vis sans fin (5) dans lequel s'engage au moins une roue à vis sans fin (7),
où
l'arbre à vis sans fin (5) comporte au moins une section surélevée (4) et
au moins une bague (3) disposée contre l'arbre à vis sans fin (5),
où
l'arbre à vis sans fin (5) ayant une forme conique, **caractérisée en ce que**
la bague (3) a une forme conique au moins dans certaines zones, où
la bague (3) de forme conique reposant radialement et/ou axialement de manière conique près de la forme conique de l'arbre à vis sans fin (5), le maintien étroit de la bague (3) contre l'arbre à vis sans fin (5) empêchant la rotation incontrôlée de la roue à vis sans fin (7) et/ou de l'arbre à vis sans fin (5) l'un par rapport à l'autre.

2. Unité d'entraînement pour monte-escalier selon la revendication 1, **caractérisé en ce que**
l'arbre à vis sans fin (5) comporte au moins une dent d'engagement (6) pour la roue à vis sans fin (7),
dans lequel l'élévation (4) de l'arbre à vis sans fin (5) est disposée sur au moins un côté de la dent d'engagement (6).

3. Monte-escalier avec unité d'entraînement pour un monte-escalier selon la revendication 1, **caractérisé en ce que** le monte-escalier comprend au moins un élément de siège et/ou une plateforme, dans lequel l'élévation (4) de l'arbre à vis sans fin (5) est conique, et l'entraînement (1) agit sur au moins un élément de siège et/ou sur au moins une plateforme du monte-escalier.

4. Unité d'entraînement pour monte-escalier selon la revendication 1, **caractérisé en ce que** la bague (3) est une conception de boîtier.
